# EUROPEAN PATENT APPLICATION

(11) **EP 2 265 003 A2**
(43) Date of publication of application: **22.12.2010**
(21) Application number: 10165010.9
(22) Date of filing: 04.06.2010
(51) Int. Cl.: H04N 5/445, H04L 12/28

(54) **Remote controller and displaying method thereof**

(30) Priority: 16.06.2009 KR 20090053634
(71) Applicant: SAMSUNG ELECTRONICS CO., LTD., Suwon-si Gyeonggi-do 442-742 (KR)
(72) Inventor: Park, Jong-wook, Seoul (KR)
(74) Representative: Fearnside, Andrew Simon

(57) **Abstract**

A displaying method for a remote controller for remotely controlling a broadcast display apparatus includes displaying information (S710) of at least one external device connected to the broadcast display apparatus, transmitting a control command (S750) to control a selected external device which is selected from the at least one external device to the selected external device through the broadcast display apparatus, receiving a result (S760) of executing the control command of the external device in response to the control command, and displaying the result (S780) of executing the control command and a control menu for controlling operation of the selected external device.

## Description

### CROSS-REFERENCE TO RELATED APPLICATION

This application claims priority from Korean Patent Application No. 10-2009-0053634, filed June 16, 2009, in the Korean Intellectual Property Office, the disclosure of which is incorporated herein by reference in its entirety.

### BACKGROUND

### 1. Field

Apparatuses and methods consistent with the inventive concept relate to a remote controller and a displaying method thereof, and more particularly, to a remote controller which controls an external device connected to a broadcast display apparatus communicating therewith, and a displaying method thereof.

### 2. Description of the Related Art

A remote controller is an apparatus which remotely controls a broadcast display apparatus. The broadcast display apparatus, which receives a digital satellite broadcast, converts the digital or analog broadcast which is transmitted from a broadcasting station and video and audio signals which are input from various external devices, such as a video player, a digital versatile disk (DVD) player, or a Blu-ray disc (BD) player, into a transport stream (TS) signal, and transmits the TS signal to an external display apparatus. An example of a broadcast display apparatus may include a digital television, an Internet protocol television (IPTV) of video on demand (VOD), or a set-top box.

Recently, as the broadcast display apparatus has been rapidly developed, the control function of the remote controller to control the broadcast display becomes diversified. Furthermore, as the number of broadcast channels increases up to several hundreds, the user's demand for watching programs of the plurality of channels increases.

Typically, a program corresponding to a channel tuned by the remote controller is displayed on the broadcast display apparatus. If a user wishes to watch a program of a channel different than the tuned channel, the user changes the channel or uses a picture in picture (PIP) function provided by the broadcast display apparatus to watch the program of the different channel.

However, when the user watches a broadcast program corresponding to a tuned channel on a main screen and watches a program of a different channel on a sub-screen using the PIP function, the size of a broadcast image displayed on the main screen is reduced to accommodate the sub-screen.

Also, if several users wish to change a channel of a program they are watching, they may watch the program through the main screen with an adjusted size, rather than the full screen, until the channel change is completed.

### SUMMARY

Exemplary embodiments may address at least the above problems and/or disadvantages and other disadvantages not described above. Also, exemplary embodiments are not required to overcome the disadvantages described above, and an exemplary embodiment may not overcome any of the problems described above. According to the present invention there is provided an apparatus and method as set forth in the appended claims. Other features of the invention will be apparent from the dependent claims, and the description which follows.

According to one or more exemplary embodiments, there is provided a remote controller which reproduces a broadcast program corresponding to a changed channel without changing a broadcast program being reproduced on a broadcast display apparatus, and a displaying method thereof.

According to an aspect of an exemplary embodiment, there is provided a displaying method of a remote controller for remotely controlling a broadcast display apparatus, the method including displaying information of at least one external device connected to the broadcast display apparatus, transmitting a control command to control an external device which is selected from among the at least one external device to the external device, receiving a result of executing the control command of the external device in response to the control command, and displaying the result of executing the control command and a control menu for controlling operation of the external device.

The control menu may include at least one control item for controlling operation of the external device, and the displaying method may further include, if the control item is selected, transmitting a control command corresponding to the selected control item to the external device through the broadcast display apparatus.

The control command may be transmitted to the external device through the broadcast display apparatus.

The receiving operation may receive the result of executing the control command, which is a response to the control command, from the external apparatus through the broadcast display apparatus.

The result of executing the control command may include a broadcast signal, and the displaying operation may display the broadcast signal corresponding to the control command transmitted in the transmitting operation.

The displaying method may further include decoding a broadcast signal corresponding to the result of executing the control command, and reproducing the decoded broadcast signal.

The control menu may include a first menu which displays a control item for controlling a different external device other than the selected external device, and a second menu which displays a control item for controlling the broadcast display apparatus.

The displaying operation may include, if the second menu is selected while the result of executing the control command is being displayed, continuing to display the result of executing the control command and displaying the second menu.

The external device may be at least one of a set-top box, a BD player, a DVD player, and a home theater.

The information of the external device may include at least one of a product name, a serial number, and a type of the external device. The displaying operation may display the information of the external device in at least one format of an image, icon, and an animation.

According to another aspect of an exemplary embodiment, there is provided a remote controller for remotely controlling a broadcast display apparatus, the remote controller including a display which displays information of at least one external device connected to the broadcast display apparatus, an interface which transmits a control command to control an external device which is selected from among the at least one external device to the external device through the broadcast display apparatus, and receives a result of executing the control command of the external device in response to the control command, and a controller which controls the display to display the result of executing the control command and a control menu for controlling operation of the external device.

The control menu may include at least one control item for controlling operation of the external device, and, if the control item is selected, the controller may control the interface to transmit a control command corresponding to the selected control item to the external device through the broadcast display apparatus.

The interface may receive the result of executing the control command, which is a response to the control command, from the external device through the broadcast display apparatus.

The result of executing the control command may include a broadcast signal, and the display may display the broadcast signal which corresponds to the control command transmitted through the interface.

The remote controller may further include a signal processor which decodes a broadcast signal corresponding to the result of executing the control command.

The controller may control the display to reproduce the decoded broadcast signal.

The control menu may include a first menu which displays a control item for controlling a different external device other than the selected external device, and a second menu which displays a control item for controlling the broadcast apparatus.

If the second menu is selected while the result of executing the control command is being displayed, the controller may control the display to continue to display the result of executing the control command and display the second menu.

The external device may be at least one of a set-top box, a BD player, a DVD player, and a home theater.

The information of the external device may include at least one of a product name, a serial number and a type of the external device, and the display may display the information of the external device in at least one format of an image, an icon, and an animation.

According to another aspect of an exemplary embodiment, there is provided a displaying method of a remote controller for remotely controlling a broadcast display apparatus, the displaying method including displaying information of at least one external device connected to the broadcast display apparatus, receiving selection of an external device to control based on the displayed information of the external device, displaying a control menu including a control item for controlling the selected external device, transmitting a control command corresponding to a control item which is selected from the displayed control menu to the external device through the broadcast display apparatus, receiving a result of executing the control command of the external device in response to the control command, and displaying the result of executing the control command and the control menu.

### BRIEF DESCRIPTION OF THE DRAWINGS

The above and/or other aspects of certain exemplary embodiments will be described with reference to the accompanying drawings, in which:

FIG. 1 is a block diagram illustrating a remote controller, a broadcast display apparatus, and an external device according to an exemplary embodiment;

FIG. 2 is a detailed block diagram illustrating the remote controller according to an exemplary embodiment;

FIG. 3 is a view illustrating information regarding external devices connected to the broadcast display apparatus, which is displayed on the display provided on the remote controller according to an exemplary embodiment;

FIG. 4 is a view illustrating a control menu and a result of executing a control command which are displayed on the display of the remote controller according to an exemplary embodiment;

FIG. 5 is a detailed block diagram illustrating the broadcast display apparatus which communicates with the remote controller according to an exemplary embodiment;

FIG. 6 is a detailed block diagram illustrating the external device according to an exemplary embodiment; and

FIG. 7 is a flowchart illustrating an operating method of the remote controller according to an exemplary embodiment.

### DETAILED DESCRIPTION OF EXEMPLARY EMBODIMENTS

Certain exemplary embodiments are described in greater detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

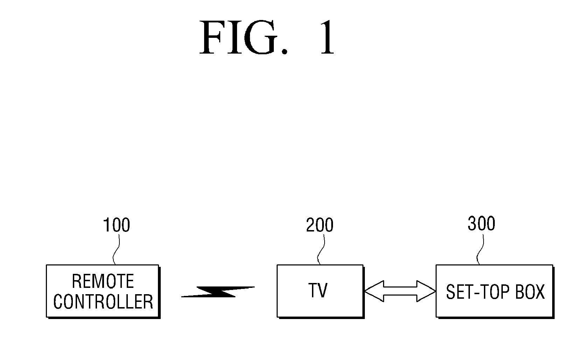

FIG. 1 is a block diagram illustrating connection relationship among a remote controller, a broadcast display apparatus and an external device according to an exemplary embodiment. In this exemplary embodiment, the broadcast display apparatus is a TV and the external device is a set-top box, for example. Examples of the broadcast display apparatus may include a monitor and an electronic album, and examples of the external device may include a DVD player, a BD player, or a home theater.

Referring to FIG. 1, a remote controller 100 communicates with a TV 200 in a wireless manner. The TV 200 is connected to a set-top box 300 via a cable. The TV 200 and the set-top box 300 may communicate with each other according to High-Definition Multimedia Interface / Consumer Electronic Connection (HDMI-CEC) or an infrared communication method. However, the TV 200 and the set-top box 300 may communicate wirelessly.

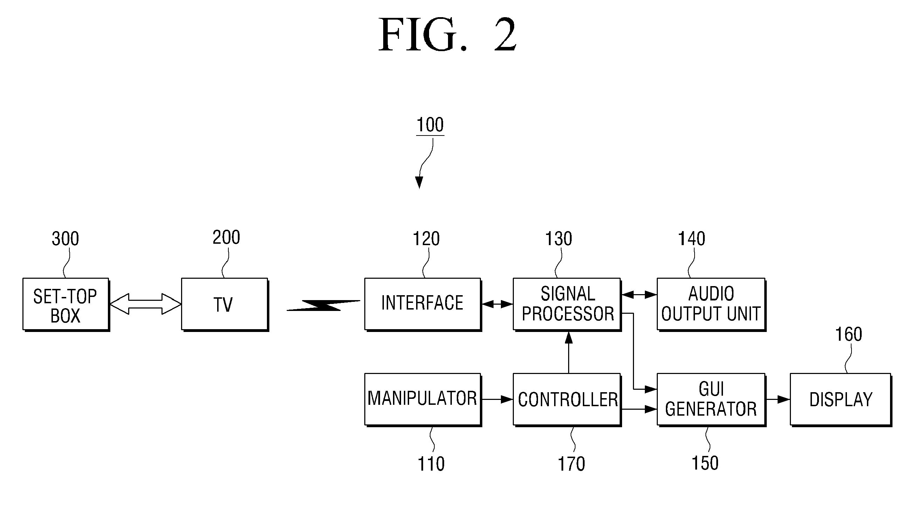

The remote controller 100 transmits a control command to control the set-top box 300 to the set-top box 300 through the TV 200, In response to the control command, the set-top box 300 transmits a result of executing the control command to the remote controller 100 through the TV 200. The operation of the remote controller 100 controlling the set-top box 300 through the TV 200 is described below with reference to FIG. 2.

FIG. 2 is a detailed block diagram illustrating the remote controller according to an exemplary embodiment. As shown in FIG. 2, the remote controller 100 includes a manipulator 110, an interface 120, a signal processor 130, an audio output unit 140, a graphic user interface (GUI) generator 150, a display 160, and a controller 170.

The manipulator 110 receives a command to display at least one external device connected to the TV 200 from a user. Also, the manipulator 110 receives user's selection of one of external devices connected to the TV 100 to display a control menu. For example, the set-top box 300 is selected from the displayed external devices available for selection.

Also, the manipulator 110 receives user's selection of a control item to control the operation of the set-top box 300 from a plurality of control items of the control menu. The control item is an item of the control menu through which a user may input a control command to change the channel of the set-top box 300, control the volume of a broadcast program being reproduced on the TV 200, fast-forward, rewind, set a favorite channel, access the Internet, and/or watch the TV.

The manipulator 110 may be implemented as, for example, a touch screen, a touch pad, or a key button.

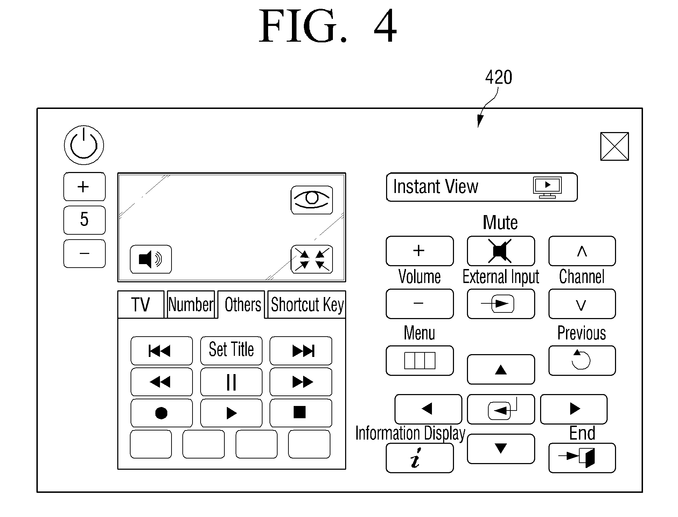

The interface 120 transmits a control command corresponding to the control item selected through the manipulator 110 to the set-top box 300 through the TV 200. The interface 120 transmits the control command to the TV 200 in a wireless manner and the TV 200 transmits the control command received from the interface 120 to the set-top box 300 in a wired manner. The operation of transmitting the control command from the TV 200 to the set-top box 300 is explained below in detail with reference to FIG. 4.

The interface 120 receives a result of executing a control command from the set-top box 300 through the TV 200.

More specifically, if the control command is to change the channel of the set-top box 300, the interface 120 receives a broadcast signal corresponding to the changed channel from the set-top box 300 through the TV 200. Receiving the broadcast signal is one of examples of the result of executing the control command and includes receiving a video signal and an audio signal.

The signal processor 130 divides the broadcast signal received from the interface 120 into a video signal, an audio signal, and an additional information signal. The signal processor 130 performs signal processing, such as video decoding, video scaling, and audio decoding, with respect to the video signal and the audio signal. That is, the signal processor 130 decodes the video signal and the audio signal which correspond to the changed channel received from the interface 120.

The signal processor 120 outputs the video signal and the additional information to the GUI generator 150, and outputs the audio signal to the audio output unit 140. The additional information includes electronic program guide (EPG) information.

The audio output unit 140 converts the audio signal output from the signal processor 130 into a sound, and outputs the sound through a speaker (not shown) provided in the remote controller 100.

The GUI generator 150 generates a GUI to be provided to the user. The GUI generator 150 adds the generated GUI to the video signal output from the signal processor 130.

The display 160 displays an image which is added with the GUI by the GUI generator 150. That is, the display 160 displays a broadcast program corresponding to the changed channel.

The controller 170 generates a control command corresponding to the control item selected by the user through the manipulator, and controls the interface 120 to transmit the generated control command to the set-top box 300 through the TV 200. The controller 170 converts control data containing the control command into data in accordance with a wireless communication standard, and controls the interface 120 to transmit the converted control data to the TV 200.

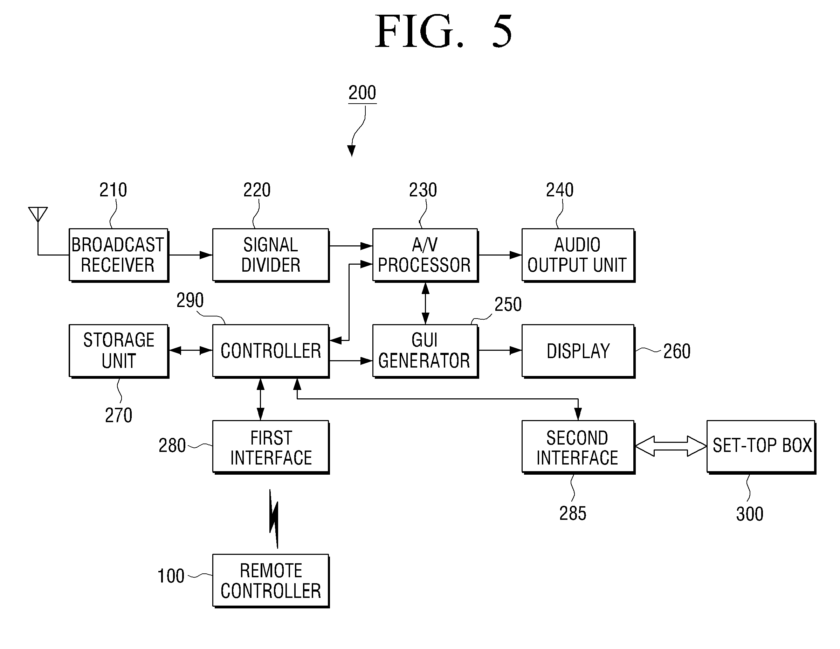

When the result of executing the control command is received from the TV 200 through the interface 120 in response to the control command contained in the control data, the controller 170 controls the signal processor 130 and the GUI generator 150 to display an image according to the result of executing the control command on the display 160. The operation of displaying the result of executing the control command is explained below in detail with reference to FIG. 5.

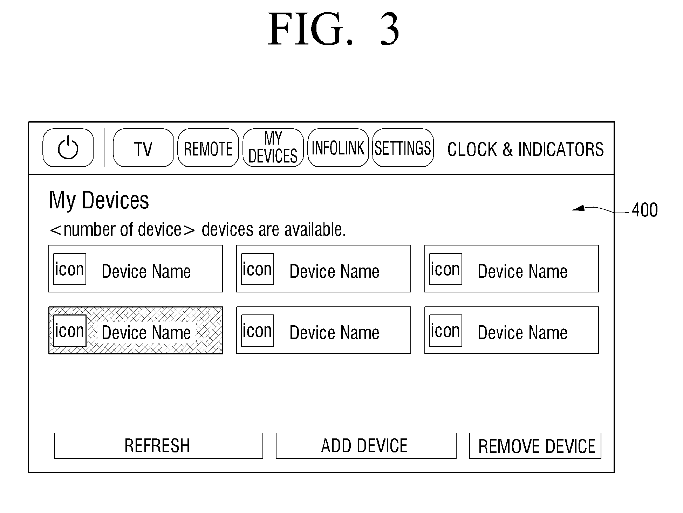

Also, when a command to display an external device is received from the manipulator 110, the controller 170 controls the GUI generator 150 to display information 400 regarding external devices connected to the TV 200 on the display 160. That is, as shown in FIG. 3, the display 160 displays information 400 regarding the external devices. The external device information 400 may include a device name and/or a serial number of the external device, and may be displayed on the display 160 as at least one of an image, an icon, and an animation which represent the external device.

Also, when an external device is selected by the user through the manipulator 110 to display a control menu of the selected external device, the controller 170 controls the GUI generator 150 to display the control menu of the selected external device on the display 160. That is, if the selected external device is the set-top box 300 for example, the control menu 420 regarding the set-top box 300 is displayed on the display 160, as shown in FIG. 4.

The control menu 420 includes a plurality of control items. The control items may include items through which the user may input a control command to change the channel of the set-top box 300, control the volume of a broadcast program being reproduced on the TV 200, fast-forward, rewind, set a favorite channel, access the Internet, or watch the TV.

Also, when a TV menu tab for controlling the operation of the TV 200 is selected by the user through the manipulator 110, the controller 170 controls the GUI generator 150 to display the control menu for controlling the operation of the TV 200 on the display 160.

More specifically, if the TV menu tab is selected while the result of executing the control command is being displayed on the display 160, the controller 170 continues to display the result of executing the control command and simultaneously controls the GUI generator 150 to display the control menu including the control item for controlling the operation of the TV 200.

FIG. 5 is a block diagram illustrating the TV which communicates with the remote controller according to an exemplary embodiment. As shown in FIG. 5, the TV 200 includes a broadcast receiver 210, a signal divider 220, an audio/video (A/V) processor 230, an audio output unit 240, a GUI generator 250, a display 260, a storage unit 270, a first interface 280, a second interface 285, and a controller 290.

The broadcast receiver 210 receives a broadcast from a broadcasting station or a satellite in a wired or wireless manner and demodulates the broadcast. The broadcast signal received by the broadcast receiver 210 includes Program and System Information Protocol (PSIP), which is an additional information signal, and the PSIP data includes EPG information.

The signal divider 220 divides the broadcast signal into a video signal, an audio signal, and an additional information signal. The signal divider 220 transmits the video signal and the audio signal to the A/V processor 230.

The A/V processor 230 performs signal processing, such as video decoding, video scaling, and audio decoding, with respect to the video signal and the audio signal which are input from the broadcast receiver 210. The A/V processor 230 outputs the video signal to the GUI generator 250 and outputs the audio signal to the audio output unit 240.

On the other hand, when the received video and audio signal are stored in the storage unit 270, the A/V processor 230 may output the video signal and the audio signal to the storage unit 270 in a compressed format.

The audio output unit 240 outputs the sound or the audio signal output from the A/V processor 230 through a speaker (not shown).

The GUI generator 250 generates a GUI to provide it to the user. The GUI generator 250 adds the generated GUI to the image which is output from the A/V processor 230.

The display 260 displays the image output from the A/V processor 230. Also, the display 260 displays the GUI regarding the EPG, which is generated by the GUI generator 250.

The first interface 280 provides communication between the TV 200 and the remote controller 100, and receives control data from the remote controller 100 in a wireless manner. The control data refers to data containing a control command.

The first interface 280 is controlled by the controller 290 to transmit a broadcast signal received from the second interface 285 to the remote controller 100. The broadcast signal transmitted to the remote controller 100 is encoded in accordance with a wireless communication standard.

The second interface 285 provides communication between the TV 200 and the set-top box 300 and receives a broadcast signal which is encoded in accordance with a wired communication standard from the set-top box 300. The broadcast signal indicates the result of executing the control command which is received from the remote controller 100.

The controller 290 controls the overall operation of the TV 200, and converts the control data received from the first interface 280 into data in accordance with a wired communication standard and transmits the converted control data to the set-top box 300 through the second interface 285.

More specifically, the controller 290 receives the control data in accordance with a wireless communication standard from the remote controller 100 through the first interface 280, converts the control data into data in accordance with a wired communication standard and transmits it to the set-top box 300. The wireless communication standard may be Wireless HDMI, Wi-Fi, Bluetooth, IR Blaster, or infrared communication. The wired communication standard may be HDMI, USB, IR Blaster, or infrared communication.

The controller 290 decodes the broadcast signal received from the second interface 285 and encodes the decoded broadcast signal in accordance with a wireless communication standard. Also, the controller 290 transmits the encoded broadcast signal to the remote controller 100 through the first interface 280. The broadcast signal indicates the result of executing the control command which corresponds to the control data received from the remote controller 100 through the first interface 280.

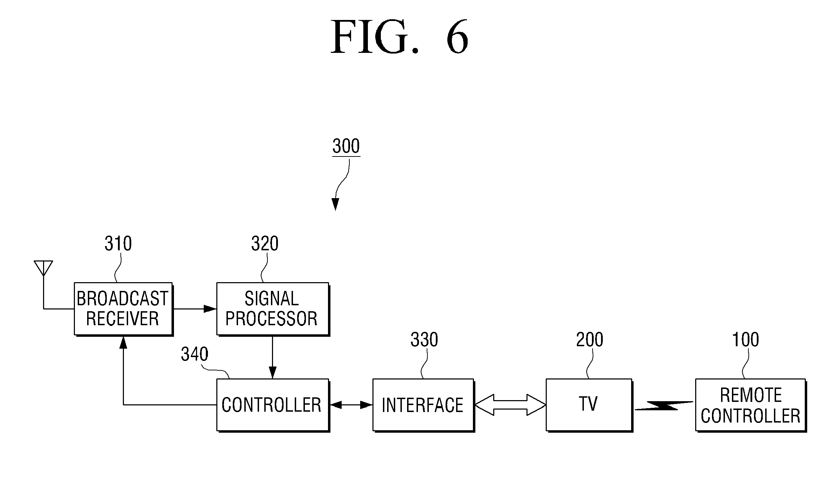

FIG. 6 is a detailed block diagram illustrating the set-top box to be controlled by the remote controller according to an exemplary embodiment. As shown in FIG. 6, the set-top box 300 includes a broadcast receiver 310, a signal processor 320, an interface 330, and a controller 340.

The broadcast receiver 310 receives a broadcast from a broadcasting station and/or a satellite in a wired or wireless manner and demodulates the broadcast. The broadcast signal received by the broadcast receiver 310 includes PSIP data, which is an additional information signal, and the PSIP data includes EPG information.

The broadcast receiver 310 receives a broadcast signal corresponding to a channel tuned by the controller 340 from a broadcasting station and/or a satellite in a wired or wireless manner.

The signal processor 320 divides the broadcast signal received by the broadcast receiver 310 into a video signal, an audio signal, and an additional information signal. The signal processor 320 performs signal processing, such as video decoding, video scaling, and audio decoding, with respect to the video signal and/or the audio signal.

The interface 330 provides communication between the set-top box 300 and the TV 200, and receives control data containing a control command from the TV 200. The interface 330 transmits the result of executing the control command to the TV 200 in response to the control command.

The controller 340 converts the audio signal and the video signal which have been processed by the signal processor 320 according to a wired communication standard and controls the interface 330 to transmit the audio signal and the video signal to the TV 200.

The controller 340 separates the control command from the control data received by the interface 330, controls the broadcast receiver 310 and the signal processor 320 to perform operation corresponding to the control command, and transmits the result of executing the control command to the TV 200.

More specifically, if the control command indicates a channel-up command for example, the controller 340 controls the broadcast receiver 310 to perform the operation for the channel-up, converts the broadcast signal for the channel up received by the broadcast receiver 310 according to a wired communication standard, and transmits the converted broadcast signal to the TV 200 through the interface 330.

If the control command indicates a volume-up command for example, the controller 340 controls the signal processor 320 to convert the broadcast signal the volume of which is turned up according to a wired communication standard, and transmits the converted broadcast signal to the TV 200 through the interface 330.

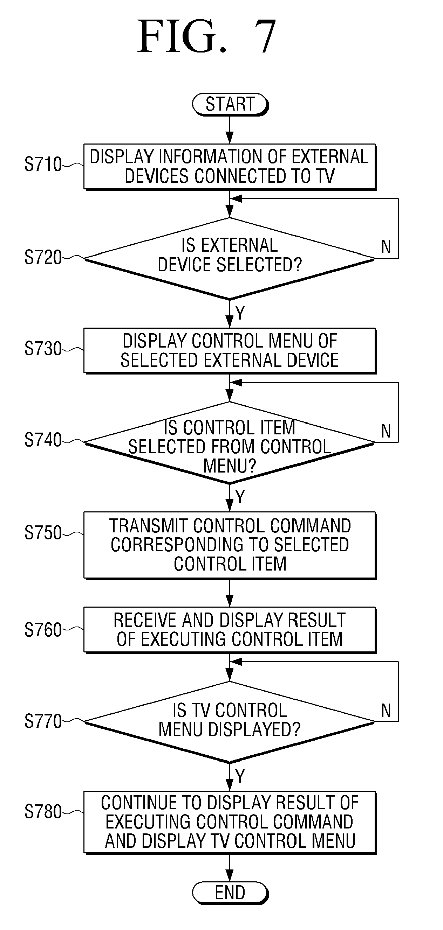

FIG. 7 is a flowchart illustrating a method for operating the remote controller according to an exemplary embodiment.

Referring to FIG. 7, information regarding external devices connected to the TV 200 is displayed on the display 160 (S710).

More specifically, when a command to display external devices is received from the manipulator 110, the controller 170 displays information regarding the external devices connected to the TV 200 on the display 160. The information regarding the external devices includes at least one of a product name, a serial number, and a type of external device, and is displayed on the display 160 as at least one of an image, an icon, and an animation which represent the external device.

If one of the external devices is selected (S720: Y), the controller 170 displays a control menu for the selected external device on the display 160 (S730). For example, the set-top box 300 is selected from the external devices connected to the TV 200.

More specifically, if a set-top box 300 is selected from the external devices displayed in operation S710 by the user through the manipulator 110, the controller 170 displays a control menu for controlling the operation of the set-top box 300 on the display 160. As shown in FIG. 4, the control menu includes a plurality of control items. The control items may include an item through which the user may input a control command to change the channel of the set-top box 300, control the volume of a broadcast program being reproduced on the TV 200, fast-forward, rewind, set a favorite channel, access the Internet, and/or watch the TV.

If one of the control items on the control menu is selected (S740:Y), the controller 170 generates a control command corresponding to the selected control item and transmits the control command to the TV 200 (S750).

For example, the control item "channel-up" may be selected by the user through the manipulator 110, while the channel No. 37 is broadcast on the display 260 of the TV 200.

More specifically, if the control item "channel-up" is selected by the user through the manipulator 110, the controller 170 generates a control command corresponding to the "channel-up" and transmits the control command to the TV 200 through the interface 120. The controller 170 converts control data containing the control command into data in accordance with a wireless communication standard and transmits the converted control data to the TV 200. As for the wireless communication standard, Bluetooth, Wi-Fi, or Wireless HDMI may be used.

Then, the TV 200 receives the control data containing the control command from the remote controller 100 and converts the control data into data in accordance with a wired communication standard. The TV 200 transmits the converted control data to the set-top box 300. The wired communication standard refers to a communication standard which enables data to be transmitted to the set-top box 300 through a component or a composite terminal provided in the TV 200, and, for example, is HDMI or USB.

The set-top box 300 separates the control command from the control data received from the TV 200 and performs the channel-up corresponding to the control command. That is, the set-top box 300 encodes a broadcast signal of the channel No. 38 which is changed from the channel No. 37, and transmits the encoded broadcast signal to the TV 200.

The TV 200 receives the encoded broadcast signal from the set-top box 300 and decodes the encoded broadcast signal. The TV 200 encodes again the broadcast signal which has been decoded in accordance with a wireless communication standard and transmits the broadcast signal to the remote controller 100.

The interface 120 receives the encoded broadcast signal from the set-top box 300 through the TV 200 and the signal processor 130 decodes and displays the received broadcast signal (S760).

More specifically, when the encoded broadcast signal of the channel No. 38 is received from the TV 200, the signal processor decodes the broadcast signal and separates an audio signal and a video signal from the decoded broadcast signal.

Then, the controller 170 outputs the audio signal of the channel No. 38 to the audio output unit 140 and the video signal of the channel No. 38 to the display 160. Accordingly, the broadcast program of the channel No. 38 is reproduced on the remote controller 100 as a result of executing the control command in response to the channel-up command selected in operation S740.

If the TV menu tab for controlling the operation of the TV 200 is selected while the result of executing the control command is being displayed (S770: Y), the controller 170 displays a control menu for controlling the operation of the TV 200 (S780).

That is, as shown in FIG. 4, the controller 170 displays the control menu including a control item to control the operation of the TV 200 on the display 160 while continuing to display the broadcast program of the channel No. 38 on the display 160.

In the above embodiment, the control menu of the set-top box 300 is displayed. However, this should not be considered as limiting. The display 160 of the remote controller 100 may display a control menu for an external device other than the set-top box 300, such as a DVD player, BD player, or home theater, that may be selected from the external devices connected to the TV 200.

Also, the TV 200 is an example of the broadcast display apparatus that receives a broadcast signal from a satellite or a broadcasting station and reproduces it. The broadcast display apparatus may include a laptop computer, a personal computer, or a Digital Multimedia Broadcasting (DMB) apparatus.

Also, in an exemplary embodiment, the remote controller 100 displays the control menu for controlling the set-top box 300 connected to the TV 200. However, this should not be considered as limiting. The remote controller 100 may display control menus for the plurality of external devices connected to the TV 200. In this case, the plurality of external devices may have different control menus and the remote controller 100 may display a control menu corresponding to any external device selected by the user.

Also, as described, the TV 200 communicates with the set-top box 300 in a wired manner and communicates with the remote controller 100 in a wireless manner. However, this should not be considered as limiting. The TV 200 may communicate with the set-top box 300 in a wireless manner and may communicate with the remote controller 100 in a wired manner.

Also, in an exemplary embodiment, the TV 200 and the remote controller 100 communicate with each other in a different communication method from that between the TV 200 and the set-top box 300. However, the TV 200 communicates with the remote controller 100 and the set-top box 300 in the same communication method. That is, if the TV 200 communicates with the set-top box 300 according to HDMI-CEC and communicates with the remote controller 100 according to Wireless HDMI, the TV 200 bypasses the control data containing the control command received from the remote controller 100 to the set-top box 300 and bypasses the broadcast signal received from the set-top box 300 in response to the control data to the remote controller 100.

Also, in an exemplary embodiment, the remote controller 100 provides the control menu for controlling the operation of the external device connected to the TV 200. However, this should not be considered as limiting. The remote controller 100 may provide a control menu for controlling the operation of the TV 200. That is, as shown in FIG. 3, if the menu "REMOTE" is selected, the remote controller 100 may display the control menu for controlling the operation of the TV 200.

Also, in an exemplary embodiment, the display provided with the remote controller 100 displays the result of executing the control command for the external device selected from the plurality of external devices connected to the TV 200 and simultaneously displays the control menu having the control items for controlling the operation of the TV 200. However, this should not be considered as limiting. While displaying the result of executing the control command, the display of the remote controller 100 may display a control menu having control items for controlling the operation of a different external device other than the selected external device.

Also, in an exemplary embodiment, the result of executing the control command is a broadcast signal according to the channel-up control command. However, this should not be considered as limiting. Another example of the result of executing the control command is an audio signal the volume of which is controlled or a video signal which is loaded from a DVD player.

That is, according to another exemplary embodiment, in which a DVD player may be selected from the external devices connected to the TV 200, the display 260 of the TV 200 displays a broadcast signal of a channel tuned by the user and the display 160 of the remote controller 100 displays a video signal which is loaded from the DVD player.

At this time, if a menu tab for controlling the operation of another external device, a set-top box, is selected, the display 160 of the remote controller 100 may display the control menu for the external device corresponding to the selected menu tab while displaying the video signal loaded from the DVD player.

According to exemplary embodiments of the present invention, the remote controller 100 transmits the control command for controlling the external device connected to the broadcast display apparatus to the external device, and receives the result of executing the control command from the external device through the broadcast display apparatus and displays the result, so that a different broadcast program from the broadcast program being displayed on the broadcast display apparatus can be displayed.

Also, the result of executing the control command for controlling the operation of the external device connected to the broadcast display apparatus is displayed on the display of the remote controller 100, so that the operation of the broadcast display apparatus can be controlled.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A displaying method of a remote controller for remotely controlling a broadcast display apparatus, the method comprising:
displaying information (S710) of at least one external device connected to the broadcast display apparatus;
transmitting a control command (S750) to control a selected external device which is selected from the at least one external device to the selected external device;
receiving a result (S760) of executing the control command of the selected external device in response to the control command; and
displaying the result (S780) of executing the control command and a control menu for controlling operation of the selected external device.

2. The displaying method as claimed in claim 1, wherein the control menu includes at least one control item for controlling operation of the selected external device,
wherein the displaying method further comprises:
selecting a control item from the control menu prior to the transmitting the control command; and
transmitting the control command corresponding to the selected control item to the selected external device through the broadcast display apparatus.

3. The displaying method as claimed in claim 1 or 2, wherein the receiving comprises receiving the result of executing the control command, which is a response to the control command, from the external apparatus through the broadcast display apparatus.

4. The displaying method as claimed in any preceding claim, wherein the result of executing the control command includes receiving a broadcast signal,
wherein the displaying comprises displaying the broadcast signal corresponding to the control command transmitted in the transmitting operation.

5. The displaying method as claimed in any of claims 1 to 3, further comprising:
decoding a broadcast signal corresponding to the result of executing the control command; and
reproducing the decoded broadcast signal.

6. The displaying method as claimed in claim 1 or 2, wherein the control menu includes a first menu which displays a control item for controlling a different external device other than the selected external device, and a second menu which displays a control item for controlling the broadcast display apparatus.

7. The displaying method as claimed in claim 6, wherein the displaying operation comprises, if the second menu is selected while the result of executing the control command is being displayed, continuing to display the result of executing the control command and displaying the second menu.

8. The displaying method as claimed in any preceding claim, wherein the external device includes at least one of a set-top box, a Blu-ray disc player, a DVD player, and a home theater, the information of the external device includes at least one of a product name, a serial number, and a type of the external device, and the displaying comprises displaying the information of the external device as at least one of an image, icon, and an animation.

9. The displaying method as claimed in claim any of claims 1 to 8, wherein the control command is transmitted to the selected external device through the broadcast display apparatus.

10. A remote controller for remotely controlling a broadcast display apparatus, the remote controller comprising:
a display (160) arranged to display information of at least one external device connected to the broadcast display apparatus;
an interface (120) arranged to transmit a control command to control a selected external device which is selected from the at least one external device to the selected external device through the broadcast display apparatus, and to receive a result of executing the control command of the selected external device in response to the control command; and
a controller (170) arranged to control the display to display the result of executing the control command and a control menu for controlling operation of the selected external device.

11. The remote controller as claimed in claim 10, wherein the control menu includes at least one control item for controlling operation of the selected external device,
wherein the controller is arranged to control the interface to transmit the control command corresponding to a selected control item selected from the control menu to the selected external device through the broadcast display apparatus.

12. The remote controller as claimed in claim 10 or 11, wherein the interface is arranged to receive the result of executing the control command, which is a response to the control command, from the selected external device through the broadcast display apparatus.

13. The remote controller as claimed in any of claims 10 to 12, wherein the result of executing the control command includes receiving a broadcast signal,
wherein the display is arranged to display the broadcast signal which corresponds to the control command transmitted through the interface.

14. The remote controller as claimed in claim 10 or 11, wherein the control menu includes a first menu which displays a control item for controlling a different external device other than the selected external device, and a second menu which displays a control item for controlling the broadcast display apparatus,
wherein, if the second menu is selected while the result of executing the control command is being displayed, the controller is arranged to control the display to continue to display the result of executing the control command and display the second menu.

15. The remote controller as claimed in any of claims 10 to 14, wherein the external device includes at least one of a set-top box, a Blu-ray disc player, a DVD player, and a home theater, the information of the external device includes at least one of a product name, a serial number and a type of the external device, and the display displays the information of the external device as at least one of an image, an icon, and an animation.
